# EUROPEAN PATENT SPECIFICATION

(11) **EP 2 418 124 B1**
(45) Date of publication and mention of the grant of the patent: **14.11.2012**
(21) Application number: 10172654.5
(22) Date of filing: 12.08.2010
(51) Int. Cl.: B60R 3/02, B61D 23/02

(54) **Extendable and retractable step arrangement.**
Aus- und einziehbare Stufenanordnung
Agencement de marchepied extensible et rétractable

(43) Date of publication of application: 15.02.2012
(73) Proprietor: Thule Sweden AB, 330 33 Hillerstorp (SE)
(72) Inventor: Corne, Hans, 8930 Menen (BE); Verhelst, Jan, 8930 Menen (BE)
(74) Representative: Valea AB

(56) References cited:
- EP-A1- 1 445 151
- WO-A1-01/83279
- CN-A- 101 497 326

## Description

### TECHNICAL FIELD

The present invention relates to an extendable and retractable step arrangement for providing an extendable and retractable step for an object, such as a caravan. The extendable and retractable step arrangement comprising a step surface and an arm arrangement adapted to displace the step surface between a retracted and an extended position. The arm arrangement comprises at least three arms pivotally connecting the step surface with the object.

### BACKGROUND OF THE INVENTION

To enable comfortable campers and caravans, extendable and retractable step arrangements have been used for some time. Extendable and retractable steps can be adapted to extend as the caravan stops, as a door opens, at the command of a user, or at any other suitable time. EP 1,393,977 discloses an extendable and retractable step arrangement arranged in a housing. The extendable step extends in a direction parallel with a predetermined plane without substantially changing the level of the step surface during the extension or retraction. The step surface thus slides parallel to a plane defined by the step surface. These types of extendable and retractable step arrangements are of the sliding type. The step usually slides inside the housing. Wheels arranged on a step sometimes enable and improve the extending and retraction of the step. An actuator, such as an electrical motor or a manual step displacement mechanism, is sometimes arranged to actuate the extension and retraction of the step. A drawback of extendable and retractable step arrangements of the sliding type is that they require a housing covering the extendable and retractable step, as the mechanism and usually the actuator are sensitive to particles and dirt contamination.

Extendable and retractable step arrangements usually are positioned on the underside of a vehicle; wear and contamination of the mechanics or electrical circuits tend to be very prominent problems.

The patent publication CN 101497326 discloses an extendable and retractable step arrangement which utilizes a pivot principle to extend and retract the step. This arrangement comprises arms which are pivotally connected to e.g. the underside of a caravan and which are connected to an actuator, and at the other end, a step. The step swings or pivots to its extended position enabling a user to comfortably enter e.g. a caravan. The step surface of these types of extendable and retractable step arrangements generally has a differentiation in level during the extension or retraction movement. The step member tends to pivot between the retracted and extended position. A draw back of these constructions is that the extension and retraction of the step tend to lower the step too much, i.e. to change the level of the step member. This can be a problem for caravans with small distance between the chassis and the ground.

The extendable and retractable step arrangements disclosed above generally exhibit a separate lock mechanism. The separate lock mechanism locks the step from being accidentally retracted, or accidentally displaced, as a user steps on the step, i.e. during use. The risk for accidental retraction during use is eliminated or significantly reduced.

A variant of the extendable and retractable step arrangement which utilizes a pivot principle to be extended and retracted is currently on the market. The extendable and retractable step arrangement has an attachment member arranged to be attached to the underside of e.g. a caravan, and two pairs of arms pivotally connected to the attachment member, and a step. An actuator is arranged in the attachment member. Each arm is a unitary piece of material and has a unique attachment point at the attachment member and the step. The step of the extendable and retractable step arrangement has a level change during the extension and retraction and a separate lock mechanism to lock the step in an extended position.

There is thus a need for an extendable and retractable step arrangement which can be displaced between an extended position and a retracted position without significant level changes of the step member during the extension or retraction of the step member, and which enables a lock position with substantially no torque transferred into the actuator.

### SUMMARY OF THE INVENTION

It is an object of the present invention to provide a solution, or to reduce the above mentioned drawbacks or to at least provide for a useful alternative to the above mentioned solutions. More specifically, at least one of the objects is at least partly achieved by an extendable and retractable step arrangement for providing an object, preferably a vehicle such as a caravan or a camper, with an extendable and retractable step. The extendable and retractable step arrangement comprises a step member comprising a step surface, i.e. a surface on which a user places his/her foot.

A first arm arrangement is adapted to enable the step member to be displaced between a retracted position and an extended position. The first arm arrangement is pivotally connected to the step member at a first and a second pivot point and pivotally connected to the object, e.g. via an attachment arrangement, at a first and a second pivot point.

The first arm arrangement comprises a first arm connected to the first pivot point of the attachment arrangement and the first pivot point of the step member. A second arm is connected to the second pivot point of the attachment arrangement.

The second arm extends from the second pivot point of the attachment arrangement past the step surface and, is connected to a third arm. The third arm is pivotally connected to the second pivot point of the step member.

The present invention provides for a rigid arm arrangement which can displace the step member between the retracted and extended position without significantly changing the level of the step member, with respect to a reference point. The arm arrangement further enables a lock position counteracting a turning moment, advantageously at the second pivot point of the step member, in which parts of the arm arrangement function as a lock mechanism. The lock mechanism can be a function of the individual arms interacting or the arm arrangement can be configured to interact with parts of the step member. A plurality of arm arrangements can be arranged on the step member, e.g. two or more.

The extendable and retractable step arrangement is, due to the third arm and its connection to the second arm, provided with a lock position. The lock position, or deadlock, reduces the risk that the step is accidentally retracted, or accidentally displaced, as a user steps on the step, i.e. during use. During use, the torque that the step member is subjected to as a consequence of the user's weight and motion is counteracted by parts of the arms, thereby preventing the step from turning. None or little torque is thus transferred directly into the actuator if such is present. The risk for accidental retraction during use is eliminated or significantly reduced. No other components are thus necessary to prevent or hinder accidental retraction of the step member. The lock position is realized by the construction of the arms while still permitting the step member to be extended and retracted. No separate lock mechanism is needed.

According to an aspect of the present invention, the second arm is longer than the first arm. This enables the pivot connection between the second and third arms to be in an advantageous position, enabling a smooth transition between the retracted position and the extended position of the step member. The second arm is in an embodiment about 50 % longer than the first arm, advantageously 80 % longer, preferably about 100 % longer than the first arm. The lengths of the arms are measured as the distance between the pivot points of the first and second arms respectively.

According to an aspect of the present invention, the second arm comprises a first and a second end. The first end is pivotally connected to the attachment arrangement and, the third arm is pivotally connected to the second arm at a point between the step surface and the second end of the second arm or optionally at the second end of the second arm.

According to an aspect of the present invention, the first arm has an elongated form, optionally or additionally, the second arm has an elongated form, optionally or additionally, the third arm has an elongated form.

According to an aspect of the present invention, the third arm is adapted to extend substantially parallel with the step surface of the step member when the step member is positioned in the retracted position. This provides a small and compact retracted configuration of the step arrangement.

According to an aspect of the present invention, the extendable and retractable step arrangement comprises a lock position when in the extended position. The lock position counteracts a turning moment, advantageously at the second pivot point of the step member, at least when a user's weight acts on the step surface. It thus prevents the first pivot point of the step member from further displacement in a direction towards the second pivot point of the attachment arrangement when the step member is in the extended position. This enables the step member to carry a heavy load without directly transferring torque to an actuator, if such is present, or to transfer torque which could entail the risk that the step member is accidentally displaced to the retracted position.

The lock position is enabled by physical contact between a contact surface in the proximity of the first pivot point of the step member and the second arm. The contact surface can be arranged on the first arm, a rod or screw or the like by which the first arm has been attached to the step member. The contact surface can be in working cooperation with the second arm, or a part of the step member, however, the second arm is preferred. The second arm can for example be provided with a slot which can receive at least a part of the first arm or optionally a part of a member, e.g. a rod, by which the first arm has been attached to the step member. The second arm can thus be provided with a flange adapted to prevent the first arm from displacement in a specified direction.

The contact surface is advantageously arranged on the first arm and at a distance between 30-70 %, advantageously 30-50 %, of the total length of the second arm, measured from the second pivot point of the attachment arrangement, when the step member is in the extended position.

According to an aspect of the present invention, the second arm has an arc shaped form. The arc shaped from has a base and an apex, the apex is directed towards the first arm and the base is directed away from the first arm. The contact surface of the first arm, which enables upon contact with the second arm or parts of the step member a lock mechanism for the step member, is advantageously positioned in the proximity of the apex of the second arm.

The step member comprises a ground facing surface. The ground facing surface is intended to face the ground, or terrain, as the object or preferably vehicle is positioned to enable movement of the vehicle. The step member comprises a first and a second connecting rod, the first and second connecting rods form a first and a second plane, i.e. upper side of the connecting rods and the step surface forms the first plane P1 and the underside of the connecting rods of the step member forms the second plane P2. The second arm of the arm arrangement extends through and past the first and the second planes P1, P2. This is specifically the case when the step member is in the extended position.

In an embodiment, when the step member is in the extended position, the second arm intersects the second plane substantially at the apex of the arc shaped form of the second arm.

According to an aspect of the present invention, a fourth arm is pivotally connected to the first pivot point of the step member, and is connected at a fifth pivot point. The fifth pivot point is advantageously arranged on the second arm.

According to an aspect of the present invention, the fifth pivot point is arranged at a distance between 70-90 % of the total length of the second arm, measured from the second pivot point of the attachment arrangement, when the step member is in the extended position.

The fourth arm is adapted to extend substantially parallel with the step surface of the step member when the step member is positioned in the retracted position. This enables a small and compact configuration of the arm arrangement.

The extendable and retractable step arrangement is advantageously arranged with two arm arrangements or at least a first and a second arm arrangement. The second arm arrangement has the same configuration as the first arm arrangement.

An extendable and retractable step arrangement is advantageously used on a caravan, camper, boat, helicopter, airplane, car, bus, truck, spacecraft or the like. Caravans and campers are however the preferred area of use.

According to an aspect of the present invention, the extendable and retractable step arrangement for providing an extendable and retractable step for an object, such as a vehicle such as caravan or a camper, comprises a step surface and an arm arrangement connected to the object and adapted to displace the step surface between a retracted and extended position. The arm arrangement comprises at least a first arm pivotally connecting the step surface with the object at a first pivot point, and a second and a third arm. The second arm is pivotally connected to the object at one end and pivotally connected to the third arm at the other end. The third arm is pivotally connected to the second arm and pivotally connected to the step member.

### BRIEF DESCRIPTION OF THE DRAWINGS

The present invention will be described in greater detail and with reference to the accompanying figures in which;
figure 1 shows a camper arranged with an extendable and retractable step arrangement according to an embodiment of the present invention having a first and a second arm arrangement;
figure 2 shows the extendable and retractable step arrangement from figure 1 in the extended position;
figure 3 shows the extendable and retractable step arrangement from figure 1 in the extended position;
figures 4a-4b show the extendable and retractable step arrangement from figure 1 in the retracted position and;
figures 5a-5b show the extendable and retractable step arrangement from figure 1 in the extended position.

### DETAILED DESCRIPTION OF PREFERRED EMBODIMENTS

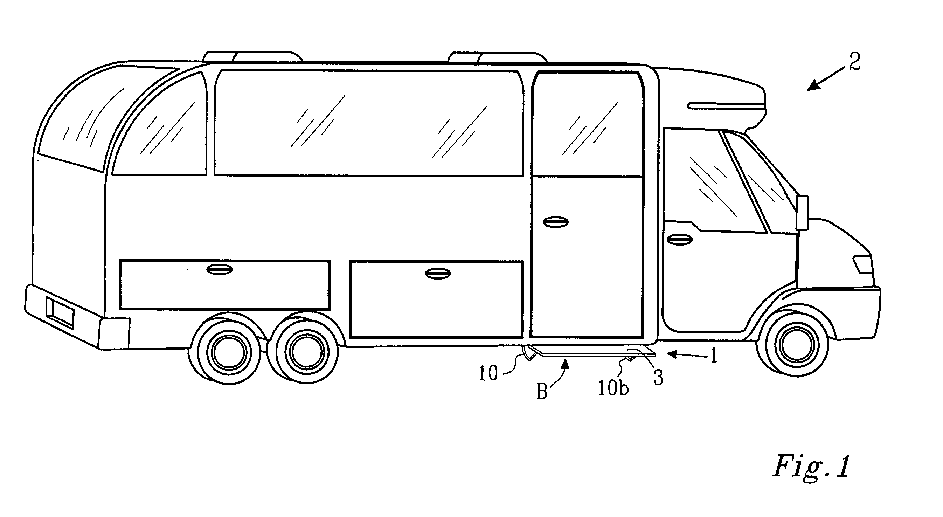

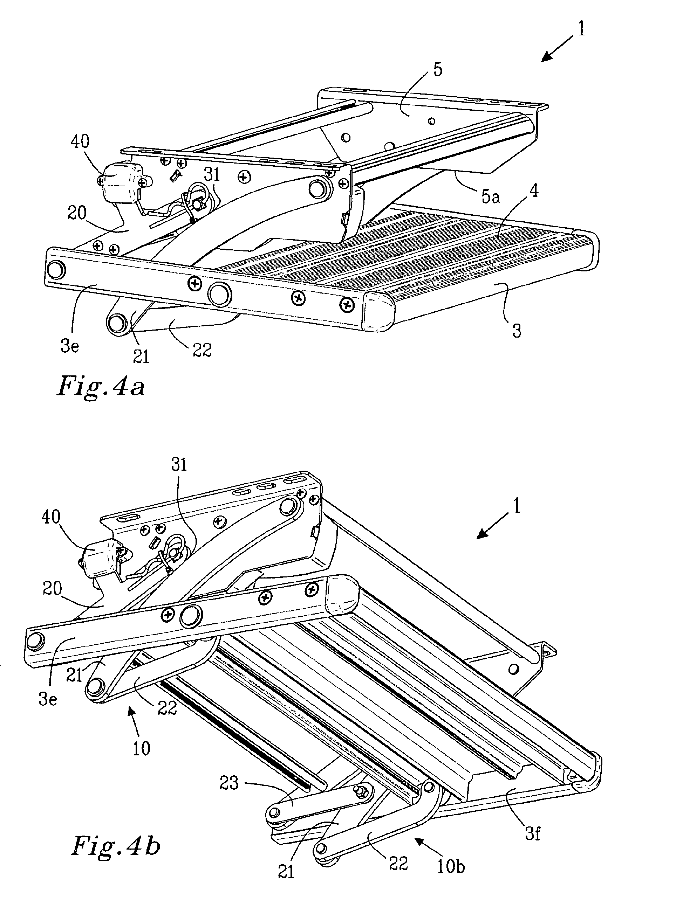

Figure 1 shows an extendable and retractable step arrangement 1, according to an embodiment of the present invention, arranged on a camper 2 and illustrated in an extended position B. The extendable and retractable step arrangement 1, hereafter referred to only as the step arrangement 1, can be arranged on any vehicles such as boats, airplanes, trucks, cars, caravans, trailers or the like. Campers and caravans are preferred vehicles. The step arrangement 1 is arranged at the underside of the camper 2 on the chassis or the body work. The step arrangement 1 comprises a step member 3 which can be displaced between a retracted position A, as seen in figures 4a-4b, and an extended position B, the extended position B is shown in figures 1, 2, 3, 5a-5b. In the extended position B, the step member 3 is positioned so as to enable a user to step on the step member 3 to enter or leave the camper 2 in an easy and orderly fashion.

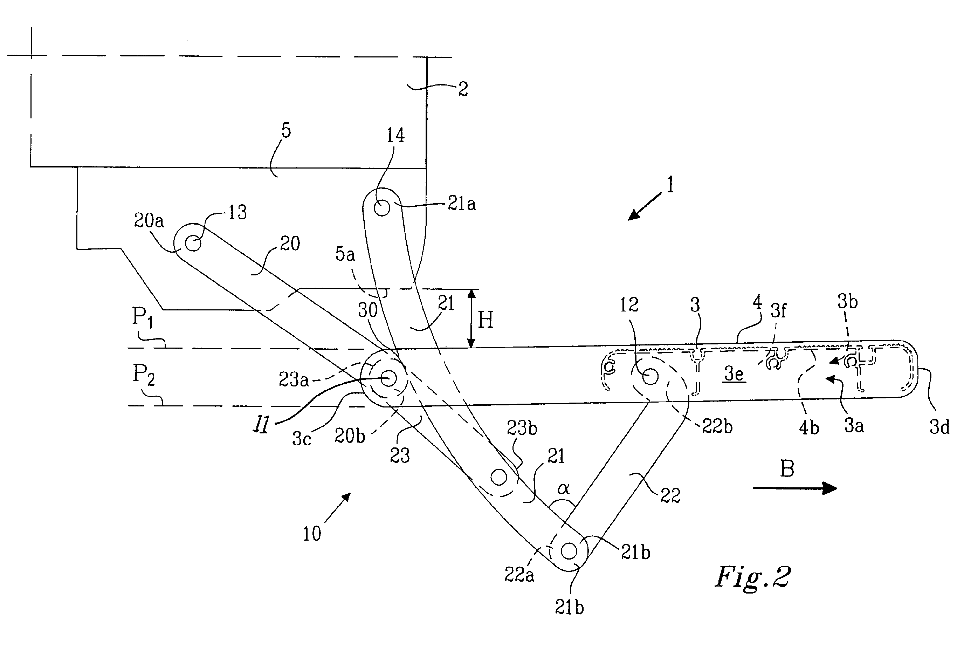

Figure 2 shows the step arrangement 1 from figure 1 from the side. The step arrangement 1 comprises a step member 3 with a step surface 4 and arranged with a first arm arrangement 10. The step arrangement 1 comprises a first and a second arm arrangement 10, 10b (only the first arm arrangement is shown in figure 2). The first arm arrangement 10 is arranged to the underside of the camper 2 via an attachment arrangement 5. The camper 2 is shown partly in a cross section. Hereafter only one arm arrangement will be described in greater detail, although it should be noted that a step member can be arranged with a plurality of arm arrangements, such as two or more, optionally three or more. In one embodiment, the step arrangement comprises only one arm arrangement.

The step arrangement 1 comprises as a step member 3 comprising a step surface 4. The step member 3 has a substantially rectangular form and can be made from wood, aluminum, plastic composites, fiber reinforced laminates or the like. At the transverse ends 3a, 3b of the step member is a first and a second connecting rod 3e, 3f arranged to connect the first and the second arm arrangement 10, 10b. Opposite of the step surface 4 is a ground facing surface 4b. The ground facing surface 4b faces the ground, or terrain, as the step arrangement 1 is arranged on the camper 1 in an intended position. The step surface 4 defines a first plane P1. A second plane P2 is defined by the underside of the first and the second connecting rods 3e, 3f. In the embodiment when the step member 3 comprises connecting rods 3e, 3f, the first plane P1 is defined by the step surface 4 and the upper side of the connecting rods 3e, 3f.

In the shown embodiment, the step member 3 includes the connecting rods 3e, 3f which define its substantially rectangular form, but in other embodiments, a step member could be connected to the arm arrangement without connecting rods by simply displacing the connection points, or by extending the step surface between the connecting rods 3e, 3f.

Connected to the step member 3 is at least one arm arrangement 10, in this case two arm arrangements 10, 10b. The arm arrangement 10 is adapted to enable the step member 3 to be displaced between the retracted position A and the extended position B, either by a manual operation mechanism or via an electrical motor. The manual operation mechanism or the electric motor are generally referred to as an actuator to operate the displacement of the step member 3. An actuator could be operated remotely or automatically for example.

The arm arrangement 10 is pivotally connected to the step member 3 at a first and a second pivot point 11, 12. In the shown embodiment, the step member 3 comprises a first and a second transverse side 3a, 3b, and a first and a second longitudinal side 3c, 3d. In figure 2, the first and the second pivot points 11, 12 are arranged in the proximity of the first transverse side 3a of the step member 3. The arm arrangement 10 is further pivotally connected to an attachment arrangement 5 at a first and a second pivot point 13, 14.

Although the arm arrangement 10 is described as being attached to an attachment arrangement 5, it is within the boundaries of the present invention that the arm arrangement 10 is connected directly to the camper 2, i.e. directly to an object or vehicle. In this sense, the attachment arrangement 5 could be considered to be the attachment means that attach the arms to the object.

The arm arrangement 10 comprises a first arm 20 connected at the first pivot point 13 of the attachment arrangement 5 and to the first pivot point 11 of the step member 3. The first arm 20 comprises a first and a second end 20a, 20b. A second arm 21 is connected to the second pivot point 14 of the attachment arrangement 5 and to the second pivot point 12 of the step member 3 via a third arm 22. The second arm 21 comprises a first and a second end 21 a, 21 b, likewise, the third arm 22 comprises a first and a second end 22a, 22b. The third arm 22 is in working cooperation with the second arm 21 and enables the step member 3 to be displaced between the retracted and extended position A, B, without significantly changing the level of the step surface 4 of the step member 3. As can further be seen in figure 2, the third arm 22 is connected to the second pivot point 12 of the step member and extends out from the plane P2 away from the ground facing surface 4b and the step surface 4 towards the ground, when the step member is in the extended position B.

The second pivot 12 point of the step member 3 is arranged at the first transverse end 3a of the step member 3, substantially in the middle between the first and the second longitudinal sides 3c, 3d, although as is noted in figures 2 and 4a-5b, a first longitudinal side 3c is defined by the ends of the longitudinal rods 3e, 3f. The third arm 22 thus provides the step member 3 with support at a favourable position for absorbing the weight of a user during use.

As is understood from figures 2, 4a-5b, the second arm 21 slides along the first and the second connecting rod 3e, 3f during the retracting and extending motion. Optionally, if the step surface 4 would extend across the whole of the step member 3, i.e. including the first and the second connecting rods 3e, 3f, the second arm 21 could slide in a slot (not shown) of the step member 3. One or more such slots could be arranged in the proximity of the first and second transverse sides 3a, 3b. Optionally, if the step arrangement 1 only has one arm arrangement 10, such a slot could be arranged in the middle of the step member to provide stability to the step member.

As is noted, the second arm 21 is longer than the first arm 20, in the shown embodiment about 100 % longer. A longer second arm 21 enables a favourable supportive position for the third arm 22, when the step member 3 is in the extended position. An angle α between 70-100° between the second arm 21 and the third arm 22, measured at the pivot connection therebetween and when the step member 3 is in the extended position, is advantageous. In the shown embodiment, the angle a is about 85°.

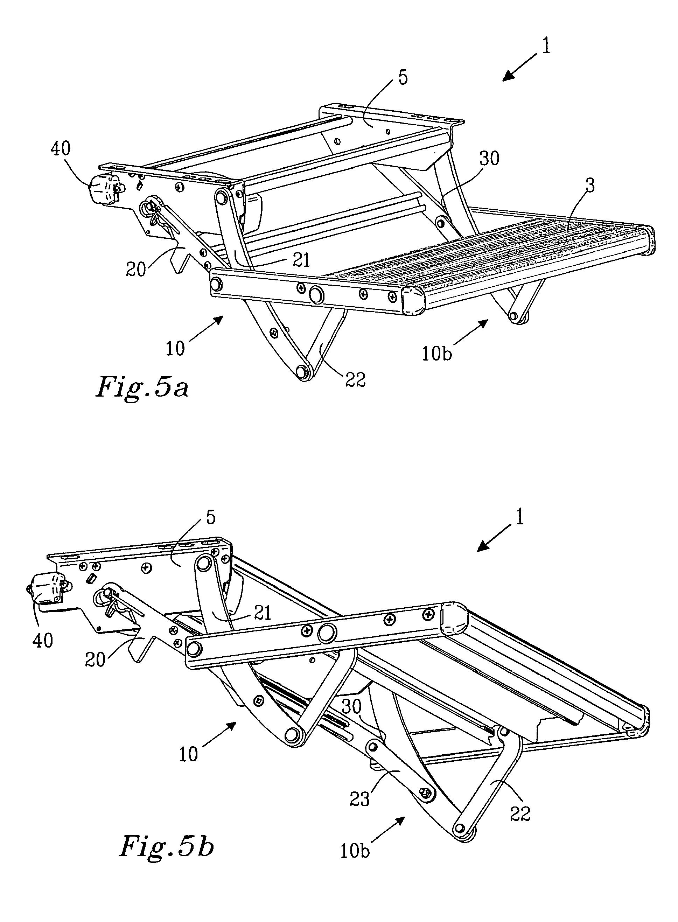

As mentioned above, an actuator, e.g. an electrical motor, can be arranged in the attachment arrangement 5. The first arm 20 can be connected to the attachment arrangement 5 via a rod extending parallel with the first longitudinal side 3c of the step member 3. The rod is further connected with the second arm arrangement 10b, specifically the first arm of the second arm arrangement 10b. The rod thus extends through the attachment member 5, enabling the actuator to operate on the rod. This is further illustrated in figures 4a and 5a for example. An actuator can also be in working cooperation with the second arm 21 of the first arm arrangement 10 and a similar second arm of the second arm arrangement 10b. The second arm 21 can be thus be connected at the second pivot point 14 of the attachment member 5, i.e. via a rod connected with the second arm arrangement 10b, and the second arm 21 of the second arm arrangement 10b.

To move the step member 3 between the retracted A position, shown in figures 4a-4b, and the extended position B, shown in figure 2 for example, the actuator is adapted to transfer a rotational motion to the interconnecting rods, thus affecting the first and the second arm arrangements 10, 10b to displace the step member 3.

A contact surface 30 on the first arm 20 is arranged at the first pivot point 11 of the step member 3. Advantageously the contact surface is at the second end 20b of the first arm 20. The contact surface 30 is a lock contact surface for preventing the first pivot point 11 I of the step member 3 from displacement in a direction towards the second pivot point 14 of the attachment member 5, when the step member is in the extended position. This lock mechanism enables a relatively heavy load to be applied to the step member 3 without transferring the imparted torque to the actuator of the attachment member 5. A safe lock mechanism is thus provided.

The arms, 20, 21, 22, 23 can be a metal rod such as plate steel, carbon fiber reinforced rod, or a rod made form other suitable material. The arms, 20, 21, 22, 23 can be connected to the attachment member 5, the step member 3 or together using screws, bolts, rods or other suitable attachment means enabling a pivot motion between them.

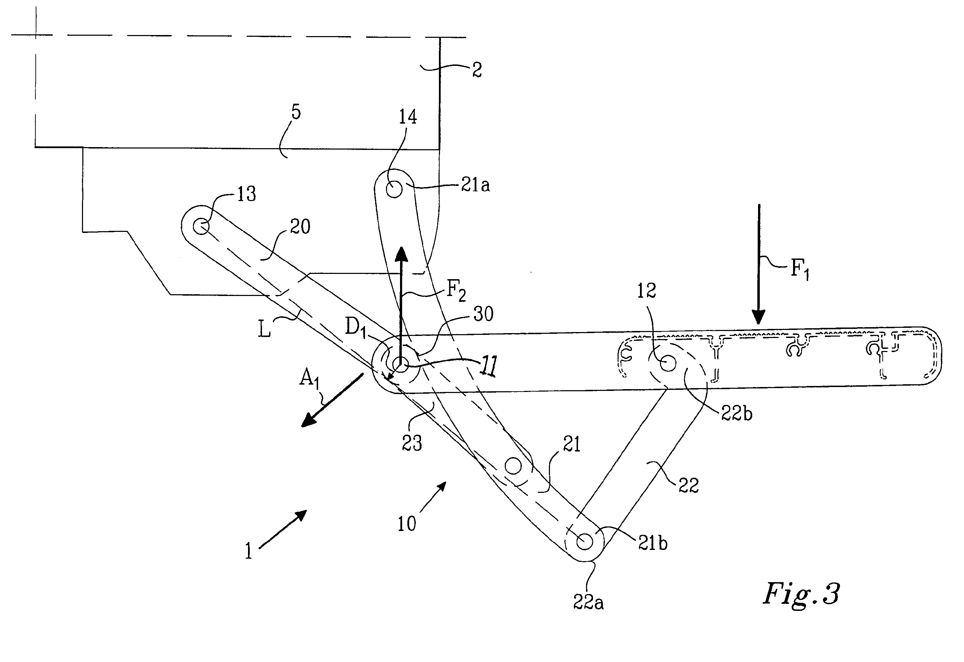

Figure 3 shows the step arrangement 1 from figure 2 when the step member 3 is in the extended position B. An imaginary straight line L between the centre of the first pivot point 13 of the attachment member 5 and the centre of the pivot connection between the second end 21 b of the second arm 21 and the first end 22a of the third arm 22 can be visualized. As is noticed, the first pivot point 11 of the step member 3 is positioned a distance D1 from the line L, towards the step member 3. Thus preventing the first arm 20 and the fourth arm 23 from being able to fold in a direction indicated with the arrow A1. This further enhances the safety and stability of the arm arrangement 10.

As a user imparts the step member 3 with the weight of his/hers body, a downwardly force component F1 acts on the step surface 4. As a result, the step member 3 will try to pivot about the second pivot point 12 of the step member 3, and about the pivot connection between the second end 21 b of the second arm 21 and the first end 22a of the third arm 22, thus generating an upwardly directed force component F2 at the first pivot point 11 of the step member 3. Due to the configuration of the arm arrangement 10, the upwardly directed force component F2 can be effectively counteracted by the second arm 21. The imparted force derived from the downwardly force component F1 will thus not be transferred to the actuator via the first and/or the second pivot points 13, 14 of the attachment arrangement 5. Not only does this configuration provide a rigid step arrangement, the actuator does not need to be modified to withstand the torque imparted by a user. As the actuator requires little or no modification to withstand transferred torque, the manufacturing method of the step arrangement 1 can be simplified.

The second arm 21 can be modified to improve the lock properties of the arm arrangement 10. For example, a slot can be arranged on the second arm 21 to receive the contact surface 30, advantageously the second end 20b of the first arm 20.

In cases were the first arm 20 of the first arm arrangement 10 is attached to the step member 3 by means of a screw or rod, that screw or rod can be a part of the contact surface 30. Further, instead of having a receiving surface at the second arm 21 for the contact surface 30, the step member 3 can be provided with a receiving surface.

The first arm arrangement 10 can be connected to the step member 3 by means of screws or rods, e.g. longitudinal rods with a circular cross section. Such screws or rods can attach the first and second arm arrangements 10, 10b separately, or they can run straight through the step member 3 and/or the attachment arrangement 5.

Figures 4a-4b show the step arrangement 10 in perspective and figures 4a, 4b show the step arrangement 1 from above from below respectively. The step member 3 is in the retracted position A. As is noted when comparing with figure 2, the fourth arm 23 and the third arm 22 are substantially parallel. This provides for a small and compact arm arrangement 10, 10b. The relative level displacement H of the step surface 4, for example with respect to a reference surface 5a of the attachment member 5, has not changed very much, compared with the level of the step surface 4 and the reference surface 5a when the step member is in the extended position. The arm arrangement 10 stops the retracting motion when the first arm 20 is contacting the second arm 21 at a stop contact surface 31, this provides the arm arrangement with a natural stop. When this point is reached, the step member 3 is in the retracted position A. This stop function is partly provided by the arc shaped form of the second arm 21.

Further seen in figure 4a is the arc shaped form of the second arm. The arc shaped form has a base and an apex, the apex is directed towards the first arm and the base is directed away from the first arm. The contact surface 30 of the first arm, which enables upon contact with the second arm or parts of the step member, a lock mechanism for the step member, is advantageously positioned in the proximity of the apex of the second arm.

Further notable in figures 4a-5b, a sensor arrangement 40 adapted to cooperate with a part of the first arm 20 is arranged on the attachment arrangement 5. The sensor is adapted to sense that the retracted position A has been reached, i.e. that the step member 3 has been fully withdrawn from the extended position B, to thereby enable safe traveling with the vehicle.

Figures 5a-5b shows the step arrangement 1 in perspective and with the step member 3 in the extended position B. The contact surface 30 of the first arm 21 is best shown on the second arm arrangement 10b. The first arm of the arm arrangements 10, 10b is thus in working cooperation with the second arm 21 during at least one time, preferably two times. In the retracted position, the first and second arms 20, 21 contact each other, thereby indicating a retracted position for the step member via the stop contact surface 31 of the first arm 20. A second contact is provided at the contact surface 30 of the first arm 20 providing the lock position, which is clearly shown in figure 5b. Further notable in figures 2, 5a-5b is that when the step member 3 is in the extended position B, the first arm 20, the fourth arm 23 and parts of the second arm 21 form a substantially straight arm.

The step arrangement 1 described above can be arranged with a single step, as described herein, or optionally with a plurality of steps, e.g. a dual extendable and retractable step. Such second step could use arm arrangements 10, 10b as disclosed herein, or optionally use arm arrangements 10, 10b as disclosed herein in combination with known arm arrangements from the prior art.

## Claims

1. An extendable and retractable step arrangement (1) for providing an object (2) with an extendable and retractable step, said extendable and retractable step arrangement (1) comprises
- a step member (3) comprising a step surface (4),
- a first arm arrangement (10) adapted to enable said step member (3) to be displaced between a retracted position (A) and an extended position (B), said first arm arrangement (10) being pivotally connected to said step member (3) at a first and a second pivot point (11, 12) and pivotally connected to an attachment arrangement (5) at a first and a second pivot point (13, 14),
said attachment arrangement (5) being attachable to said object (2),
said first arm arrangement (10) comprises
- a first arm (20) connected to said first pivot point (13) of said attachment arrangement (5) and said first pivot point (11) of said step member (3),
- a second arm (21) connected to said second pivot point (14) of said attachment arrangement (5),
**characterized in that**
said second arm (21) extends from said second pivot point (14) of said attachment arrangement (5) past said step surface (4) and,
wherein said second arm (21) is pivotally connected to a third arm (22), said third arm (22) being pivotally connected to said second pivot point (12) of said step member (3).

2. The extendable and retractable step arrangement (1) according to claim 1, wherein said second arm (21) is longer than said first arm (20).

3. The extendable and retractable step arrangement (1) according to claim 1 or 2, wherein said second arm (21) comprises a first and a second end (21 a, 21 b), said first end (21 a) is pivotally connected to said attachment arrangement (5) and, said third arm (22) is pivotally connected to said second arm (21) at a point between said step surface (4) and said second end (21 b) of said second arm (21).

4. The extendable and retractable step arrangement (1) according to claim 3, wherein said third arm (22) is pivotally connected to said second arm (21) at said second end (21 b) of said second arm (21).

5. The extendable and retractable step arrangement (1) according to any of the preceding claims, wherein said extendable and retractable step arrangement (1) comprises a lock position when being in said extended position (B), said lock position counteracting a turning moment of said step member (3) at least when a user's weight acts on said step surface (4).

6. The extendable and retractable step arrangement (1) according to claim 5, wherein said turning moment is counteracted at said second pivot point (12)

7. The extendable and retractable step arrangement (1) according to claim 6, wherein said lock position is enabled by a physical contact between a contact surface (30) in the proximity of said first pivot point (11) of said step member (3) and said second arm (21).

8. The extendable and retractable step arrangement (1) according to claim 7, wherein said contact surface (30) is arranged on said first arm (20).

9. The extendable and retractable step arrangement (1) according to claim 8, wherein said contact surface (30) is arranged at a distance between 30-70 % of the total length of said second arm (21), measured from said second pivot point (14) of said attachment arrangement (5), when said step member (3) is in said extended position (B).

10. The extendable and retractable step arrangement (1) according any of the preceding claims, wherein said step member (3) comprises a first and a second connecting rod (3e, 3f), said first and second connecting rods (3e, 3f) forming a first and a second plane (P1, P2), and wherein said second arm (21) extends through and past said first and second planes (P1, P2).

11. The extendable and retractable step arrangement (1) according any of the preceding claims, wherein a fourth arm (23) is pivotally connected at said first pivot point (11) of said step member (3), and is pivotally connected at a fifth pivot point (15) wherein,
said fifth pivot point (15) is arranged on said second arm (21).

12. The extendable and retractable step arrangement (1) according to claim 11, wherein said fifth pivot point (15) is arranged at a distance between 70-90 % of the total length of said second arm (21), measured from said second pivot point (14) of said attachment arrangement (5), when said step member (3) is in said extended position (B).

13. The extendable and retractable step arrangement (1) according to claim 11 or 12, wherein said fourth arm (23) is adapted to extend substantially parallel with said step surface (4) of said step member (3) when said step member (3) is positioned in said retracted position (A).

14. The extendable and retractable step arrangement (1) according any of the preceding claims, wherein said extendable and retractable step arrangement (1) comprises at least a second arm arrangement (100), said second arm arrangement (100) having the same configuration as said first arm arrangement (10).

15. A vehicle comprising at least one extendable and retractable step arrangement (1) according any of the preceding claims.

## Patentansprüche

1. Aus- und einziehbare Stufenanordung (1) zum Versehen eines Objekts (2) mit einer aus-und einziehbaren Stufe, wobei die aus- und einziehbare Stufenanordnung (1) umfasst:
- ein Stufenbauteil (3) mit einer Stufenoberfläche (4)
- eine erste Armanordnung (10), die so ausgelegt ist, dass das Stufenbauteil (3) zwischen einer eingezogenen Position (A) und einer ausgefahrenen Position (B) verlagert werden kann, wobei die erste Armarlordnung (10) an einem ersten und einem zweiten Schwenkpunkt (11, 12) schwenkbar mit dem Stuferibauteil (3) verbunden ist und an einem ersten und einem zweiten Schwenkpunkt (13, 14) schwenkbar mit einer Befestigungsanordnung (5) verbunden ist, wobei die Befestigungsanordnung (5) an dem Objekt (2) befestigbar ist und wobei die Armanordnung (10) umfasst:
- einen ersten Arm (20), der mit dem ersten Schwenkpunkt (13) der Befestigungsanordnung (5) und dem ersten Schwenkpunkt (11) des Stufenbauteils (3) verbunden ist,
- einen zweiten Arm (21), der mit dem zweiten Schwenkpunkt (14) der Befestigungsanordnung (5) verbunden ist,
**dadurch gekennzeichnet, dass** sich der zweite Arm (21) von dem zweiten Schwenkpunkt (14) der Befestigungsanordnung (5) aus über die Stufenoberfläche (4) hinaus erstreckt und wobei der der zweite Arm (21) schwenkbar mit einem dritten Arm (22) verbunden ist, wobei der dritte Arm (22) schwenkbar mit dem zweiten Schwenkpunkt (12) des Stufenbauteils (3) verbunden ist.

2. Aus- und einziehbare Stufenanordnung (1) nach Anspruch 1, wobei der zweite Arm (21) langer ist als der erste Arm (20).

3. Aus- und einziehbare Stufenanordnung (1) nach Anspruch 1 oder 2, wobei der zweite Arm (21) ein erstes und ein zweites Ende (21a, 21b) umfasst, wobei das erste Ende (21a) schwenkbar mit der Befestigungsanordnung (5) verbunden ist und der dritte Arm (22) schwenkbar an einem Punkt zwischen der Stufenoberftache (3) und dem zweiten Ende (21b) des zweiten Armes (21) mit dem zweiten Arm (21) verbunden ist.

4. Aus- und einziehbare Stufenanordnung (1) nach Anspruch 3, wobei der dritte Arm (22) am zweiten Ende (21b) des zweiten Armes (21) schwenkbar mit dem zweiten Arm (21) verbunden ist.

5. Aus- und einziehbare Stufenanordnung (1) nach einem der vorhergehenden Ansprüche, wobei die aus- und einziehbare Stufenanordnung (1) eine verriegelte Position umfasst, wenn sie sich in der ausgefahrenen Position (B) befindet, wobei die verriegelte Position wenigstens dann einer Drehbewegung des Stufenbauteils (3) entgegenwirkt, wenn das Gewicht eines Nutzers auf die Stufenoberfläche (4) wirkt.

6. Aus- und einziehbare Stufenanordnung (1) nach Anspruch 5, wobei der Drehbewegung an dem Schwenkpunkt (12) entgegengewirkt wird.

7. Aus- und einziehbare Stufenanordnung (1) nach Anspruch 6, wobei die verriegelte Position durch physikalischen Kontakt zwischen einer Kontaktfläche (30) in der Nähe des ersten Schwenkpunktes (1) des Stufenbauteils (3) und dem zweiten Arm (21) bewirkt wird.

8. Aus- und einziehbare Stufenanordnung (1) nach Anspruch 7, wobei die Kontaktfläche (30) an dem ersten Arm (20) angeordnet ist.

9. Aus- und einziehbare Stufenanordnung (1) nach Anspruch 8, wobei die Kontaktfläche (30) in einer Entfernung zwischen 30% und 70% der Gesamtlänge des zweiten Armes (21) angeordnet ist, gemessen von dem zweiten Schwenkpunkt (14) der Befestigungsanordnung (5) aus, wenn sich das Stufenbauteil (3) in der ausgefahrenen Position (B) befindet.

10. Anus- und einziehbare Stufenanordnung (1) nach einem der vorhergehenden Ansprüche, wobei das Stufenbauteil (3) eine erste und eine zweite Verbindungsstange (3e, 3f) umfasst, wobei die ersten und zweiten Verbindungsstangen (3e, 3f) eine erste und eine zweite Ebene (P1, P2) bilden, und wobei sich der zweite Arm (21) durch und über die ersten und zweiten Ebenen (P1, P2) hinaus erstreckt.

11. Aus- und einziehbare Stufenanordnung (1) nach einem der vorhergehenden Ansprüche, wobei ein vierter Arm (23) an dem Schwenkpunkt (11) des Stufenbauteils (3) schwenkbar verbunden ist und an einem fünften Schwenkpunkt (15) schwenkbar verbunden ist, wobei der fünfte Schwenkpunkt (15) an dem zweiten Arm (21) angeordnet ist.

12. Aus- und einziehbare Stufenanordnung (1) nach Anspruch 11, wobei der fünfte Schwenkpunkt (15) in einer Entfernung zwischen 70% und 90% der Gesamtlänge des zweiten Armes (21) angeordnet ist, gemessen von dem zweiten Schwenkpunkt (14) der Befestigungsanordnung (5) aus, wenn sich das Stufenbauteil (3) in der aufgefahrenen Position (B) befindet.

13. Aus- und einziehbare Stufenanordnung (1) nach Anspruch 1 oder 12, wobei der vierte Arm (23) dafür ausgelegt ist, sich im wesentlichen parallel zu der Stufenoberfläche (4) des Stufenbauteils (3) zu erstrecken, wenn sich das Stufenbauteil (3) in der eingezogenen Position (A) befindet.

14. Aus- und einziehbare Stufenanordnung (1) nach einem der vorhergehenden Ansprüche, wobei die aus- und einziehbare Stufenanordnurig (1) wenigstens eine zweite Armanordnung (100) umfasst, wobei die zweite Armanordnung (100) die gleiche Konfiguration aufweist wie die Armanordnung (10).

15. Fahrzeug, umfassend wenigstens eine aus- und einziehbare Stufenanordnung (1) nach einem der vorhergehenden Ansprüche.

## Revendications

1. Dispositif de marchepied extensible et rétractable (1) destiné à équiper un objet (2) d'un marchepied extensible et rétractable, ledit dispositif de marchepied extensible et rétractable (1) comprenant
- un élément formant une marche (3) avec une surface de marche (4),
- un premier ensemble de bras (10) adapté à rendre possible le déplacement dudit élément formant une marche (3) entre une position escamotée (A) et une position d'extension (B), ledit premier ensemble de bras (10) étant relié de manière pivotante audit élément formant une marche (3), à un premier et un second point de pivotement (11, 12), et à un dispositif de fixation (5), à un premier et un second de pivotement (13, 14), ledit dispositif de fixation (5) pouvant être fixé audit objet (2),
ledit premier ensemble de bras (10) comprenant
- un premier bras (20) relié audit premier point de pivotement (13) dudit dispositif de fixation (5) et audit premier point de pivotement (11) dudit élément formant une marche (3),
- un second bras (21) relié audit second point de pivotement (14) dudit dispositif de fixation (5),
**caractérisé en ce que**
le second bras (21) s'étend depuis ledit second point de pivotement (14) dudit dispositif de fixation (5) au-delà de la surface de marche (4) et
dans lequel ledit second bras (21) est relié de manière pivotante à un troisième bras (22), ledit troisième bras (22) étant relié de façon pivotante audit second point de pivotement (12) dudit élément formant une marche (3).

2. Dispositif de marchepied extensible et rétractable (1) suivant la revendication 1, dans lequel ledit second bras (21) est plus long que ledit premier bras (20).

3. Dispositif de marchepied extensible et rétractable (1) suivant la revendication 1 ou 2, dans lequel ledit second bras (21) comprend une première et une seconde extrémité (21a, 21b), ladite première extrémité (21a) est reliée de manière pivotante audit dispositif de fixation (5) et ledit troisième bras (22) est relié de façon pivotante audit second bras (21), un point entre ladite surface de marche (4) et ladite seconde extrémité (21b) dudit second bras (21).

4. Dispositif de marchepied extensible et rétractable (1) suivant la revendication 3, dans lequel ledit troisième bras (22) est relié de manière pivotante audit second bras (21), à ladite seconde extrémité (21b) dudit second bras (21).

5. Dispositif de marchepied extensible et rétractable (1) suivant une quelconque des revendications précédentes, dans lequel dispositif de marchepied extensible et rétractable (1) comprend, lorsqu'il se situe dans ladite position d'extension (B), une position de verrouillage, qui contre un moment de rotation dudit élément formant une marche (3) au moins lorsque le poids d'un utilisateur agit sur ladite surface de marche (4).

6. Dispositif de marchepied extensible et rétractable (1) suivant la revendication 5, dans lequel ledit moment de rotation est contré audit second point de pivotement (12).

7. Dispositif de marchepied extensible et rétractable (1) suivant la revendication 6, dans lequel ladite position de verrouillage est obtenue par un contact physique entre une surface de contact (30) à proximité dudit premier point de pivotement (11) dudit élément formant une marche (3) et ledit second bras (21).

8. Dispositif de marchepied extensible et rétractable (1) suivant la revendication 7, dans lequel ladite surface de contact (30) est disposée sur ledit premier bras (20).

9. Dispositif de marchepied extensible et rétractable (1) suivant la revendication 8, dans lequel ladite surface de contact (30) est disposée à une distance entre 30 et 70% de la longueur totale dudit second bras (21) mesurée depuis ledit second point de pivotement (14) dudit dispositif de fixation (5), lorsque ledit élément formant une marche (3) se situe dans ladite position d'extension (B).

10. Dispositif de marchepied extensible et rétractable (1) suivant une quelconque des revendications précédentes, dans lequel ledit élément formant une marche (3) comprend une première et une seconde bielle (3e, 3f) qui forment un premier et un second plan (P1, P2) et dans lequel ledit second bras (21) s'étend à travers et au-delà desdits premier et second plans (P1, P2).

11. Dispositif de marchepied extensible et rétractable (1) suivant une quelconque des revendications précédentes, dans lequel un quatrième bras (23) est relié de façon pivotante audit premier point de pivotement (11) dudit élément formant une marche (3) et à un cinquième point de pivotement (15), ledit cinquième point de pivotement (15) étant disposé sur ledit second bras (21).

12. Dispositif de marchepied extensible et rétractable (1) suivant la revendication 11, dans lequel ledit cinquième point de pivotement (15) est disposé à une distance entre 70 et 90% de la longueur totale dudit second bras (21) mesurée depuis ledit second point de pivotement (14) dudit dispositif de fixation (5), lorsque ledit élément formant une marche (3) se situe dans ladite position d'extension (B).

13. Dispositif de marchepied extensible et rétractable (1) suivant la revendication 11 ou 12, dans lequel ledit quatrième bras (23) est adapté à s'étendre essentiellement parallèlement à ladite surface de marche (4) dudit élément formant une marche (3), lorsque celui-ci est positionné dans ladite position escamotée (A).

14. Dispositif de marchepied extensible et rétractable (1) suivant une quelconque des revendications précédentes, dans lequel ledit dispositif de marchepied extensible et rétractable (1) comprend au moins un second ensemble de bras (100) qui présente la même conception que ledit premier ensemble de bras (10).

15. Véhicule comprenant au moins un dispositif de marchepied extensible est rétractable (1) suivant une quelconque des revendications précédentes.
